# EUROPEAN PATENT SPECIFICATION

(11) **EP 2 717 373 B1**
(45) Date of publication and mention of the grant of the patent: **06.04.2016**
(21) Application number: 12789889.8
(22) Date of filing: 25.05.2012
(51) Int. Cl.: H01M 2/26, H01M 2/30, H01M 10/04, H01M 2/22, H01M 10/0587, H01M 10/6553

(54) **ELECTRODE PLATE GROUP UNIT FOR SECONDARY BATTERY AND METHOD FOR MANUFACTURING SAME**
ELEKTRODENPLATTEN-GRUPPENEINHEIT FÜR EINE SEKUNDÄRBATTERIE UND HERSTELLUNGSVERFAHREN DAFÜR
UNITÉ DE REGROUPEMENT DE PLAQUES D'ÉLECTRODES POUR ACCUMULATEUR ET PROCÉDÉ DE FABRICATION DE CELLE-CI

(30) Priority: 25.05.2011 JP 2011117265
(43) Date of publication of application: 09.04.2014
(73) Proprietor: Shin-Kobe Electric Machinery Co., Ltd., Tokyo 104-0044 (JP)
(72) Inventor: MISHIRO Yuichiro, Tokyo 104-0044 (JP); IIDA Yukio, Tokyo 104-0044 (JP)
(74) Representative: Calderbank, Thomas Roger
(86) International application number: PCT/JP2012/063426
(87) International publication number: WO 2012/161302

(56) References cited:
- EP-A1- 1 076 371
- EP-A1- 2 209 151
- WO-A2-2009/048303
- JP-A- 2001 118 563
- JP-A- 2003 272 600
- JP-B2- 3 738 177
- US-A- 5 707 758
- US-A1- 2001 023 038

## Description

### TECHNICAL FIELD

The present invention relates to secondary-battery electrode group unit for use in a secondary battery such as a lithium ion secondary battery, and to a method of manufacturing the secondary-battery electrode group unit.

### BACKGROUND ART

In some secondary batteries such as a lithium ion secondary battery including a wound electrode group, electrodes (a positive electrode and a negative electrode) formed from a metal foil and current collecting members (a positive current collecting member and a negative current collecting member) are connected to each other utilizing a plurality of tabs integrally formed with the electrodes. If the electrodes and the current collecting members are connected to each other utilizing the plurality of tabs, however, the wound electrode group including the electrodes is not fixed with respect to the current collecting members as opposed to the tabs which are fixed to the current collecting members. Therefore, the wound electrode group in a container may be vibrated to break the tabs if strong vibration is continuously applied to the secondary battery from the outside. Collectively welding the plurality of tabs increases the electrical resistance at the welded portion, increasing the power loss. Thus, there has been developed a secondary battery with a tabless structure in which the current collecting members are directly connected to the electrodes by laser welding without utilizing the tabs to enhance the resistance to vibration and reduce the electrical resistance between the electrodes and the current collecting members [see Japanese Patent No. 3738177 (Patent Document 1), for example].

### RELATED-ART DOCUMENT

### PATENT DOCUMENT

Patent Document 1: Japanese Patent No. 3738177

In JP2003272600, the stated aim is to more reduce internal resistance than an existing secondary battery and increase the output per volume in a secondary battery having current collecting structure in which a current collecting plate is installed at the end part of a wound electrode body. In the disclosed secondary battery, an end edge of a belt-shaped core constituting a positive electrode or a negative electrode is protruded at either end of the wound electrode body, and the current collecting plate is installed so as to cover the end edge. An electrode terminal mechanism has an electrode terminal passing through a battery can, and a flange pressure-contacted to the surface of the current collecting plate and a screw shaft piece protruding to the wound electrode body side from the flange are installed in the electrode terminal. A cylinder boss closely fitting to a central hole of the wound electrode body is protruded in the current collecting plate, and the screw shaft piece of the electrode terminal is screwed to an inside screw formed on the inner peripheral surface of the cylinder boss.

### SUMMARY OF INVENTION

### TECHNICAL PROBLEM

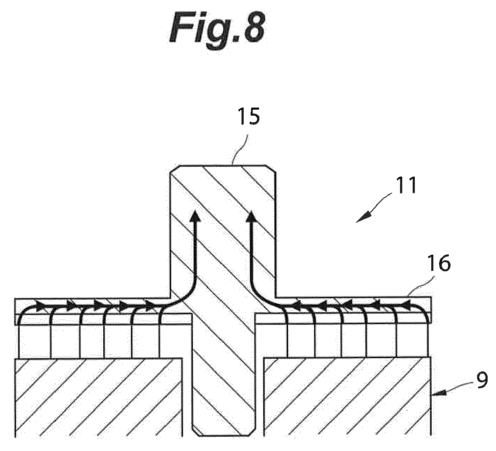

In order to directly connect the electrodes and the current collecting members to each other without utilizing the tabs, however, it is necessary to make current collecting portions of the current collecting members thin so as to allow laser welding. If the current collecting members each include a terminal forming portion forming a terminal and a current collecting portion including a plurality of welded portions to be subjected to laser welding, a current collected by the current collecting portion flows in a concentrated manner through a portion at which the terminal forming portion and the current collecting portion are connected to each other. If a large current is collected, a large amount of heat is generated at the portion of connection between the thin current collecting portion and the terminal forming portion, which may cause the current collecting member to be fused and cut off. Fig. 8 schematically illustrates passages (current passages) through which a current flows and which are formed in a portion of a positive current collecting member according to the related art.

An object of the present invention is to provide a secondary-battery electrode group unit with its electrodes and current collecting members reliably fixed to each other and enabling a current flow that is large compared to the related art, and to provide a method of manufacturing the secondary-battery electrode group unit.

### SOLUTION TO PROBLEM

According to a first aspect of the present invention there is provided a secondary-battery electrode group unit according to claim 1.

According to a second aspect of the present invention there is provided a method of manufacturing a secondary-battery electrode group unit according to claim 8.

If the current collecting portion is thick enough to be laser-welded to the unapplied portion and there is only one current path from the current collecting portion to the terminal forming portion, and if a large current flows through the current path, all the current concentrates on the portion of connection between the terminal forming portion and the current collecting portion, which may cause heat generation. Thus, in the present invention, the conductive member is provided to form the other current path.

Forming such current path enables providing a first current path passing through the current collecting portion and the terminal forming portion and a second current path bypassing the first current path. This allows suppressing heat generation at the current collecting portion even if the thickness of the current collecting portion is reduced in the lithium ion secondary battery which generates a large current or the like.

If the terminal forming portion is integrally provided at a central portion of the current collecting portion, the conductive member preferably has a through hole formed at its center portion for the terminal forming portion to pass therethrough. The same applies if the terminal forming portion and the current collecting portion are discrete members, the current collecting portion has a through hole formed at its center portion for the terminal forming portion to pass therethrough, and the current collecting portion and the terminal forming portion are welded to each other, with the terminal forming portion fitted in the through hole of the current collecting portion and the terminal forming portion contacting the current collecting portion. The terminal forming portion and the conductive member are welded to each other and the current collecting portion and the conductive member are welded to each other at a portion other than the plurality of welded portions, with the terminal forming portion fitted in the through hole and with the conductive member contacting the current collecting portion. The configuration allows the conductive member to be fixed with respect to the terminal forming portion and the current collecting portion, ensuring formation of a plurality of current paths and preventing concentration of a current.

Preferably, the plurality of welded portions of the current collecting member are each formed by deforming a part of the current collecting portion to be convex toward the unapplied portion, and are disposed to extend radially about the terminal forming portion. Thus forming the plurality of welded portions to perform laser welding increases the area of contact between the current collecting member and the unapplied portion, reducing the electrical resistance. In addition, the welding location is clearly defined, facilitating the welding work.

If the current collecting portion and the conductive member are both circular in outline shape, a radius of the outline of the conductive member is preferably smaller than a radius of the outline of the current collecting portion. The configuration ensures formation of another current path originating from various portions of the current collecting member and passing through the conductive member. In addition, preferably, the radius of the outline of the conductive member is equal to or more than half the radius of the outline of the current collecting portion. If the radius of the outline of the conductive member is less than half the radius of the outline of the current collecting portion, the current path passing through the current collecting member and the current path passing through the conductive member may be too close to each other to obtain a sufficient effect of suppressing heat generation even if a current path is formed using the conductive member.

In order to manufacture the secondary-battery electrode group unit discussed above, the plurality of welded portions of the current collecting portion may be welded to the unapplied portion by laser welding, and thereafter a conductive member may be welded to the current collecting portion and the terminal forming portion to form, besides a current path passing through the current collecting portion and the terminal forming portion, another current path allowing a current to flow from a part of the current collecting portion to the terminal forming portion. Use of the conductive member as a discrete member facilitates welding of the current collecting member, and allows formation of a plurality of current paths to the terminal forming portion, preventing heat generation. Use of a discrete member advantageously facilitates changing the electrical resistance by changing the thickness and the material of the conductive member in accordance with the amount of a flowing current.

The secondary-battery electrode group unit manufactured as described above can be applied to a secondary battery. The secondary battery may use a wound electrode group, and may be a lithium ion secondary battery, for example. Use of the secondary-battery electrode group unit according to the present invention in the secondary battery enables the electrodes and the current collecting members to be reliably fixed to each other. Since the current paths have a low electrical resistance, heat generation can be suppressed even in a secondary battery that generates a large current such as a lithium ion secondary battery.

### BRIEF DESCRIPTION OF DRAWINGS

Fig. 1A is a plan view of a lithium ion secondary battery according to an embodiment of the present invention, Fig. 1B is a cross-sectional view taken along the line IB-IB of Fig. 1A, and Fig. 1C is a bottom view of the lithium ion secondary battery according to the embodiment of the present invention.
Fig. 2A is a plan view of a current collecting member according to the embodiment of the present invention, and Fig. 2B is a front view of the current collecting member according to the embodiment of the present invention.
Fig. 3A is a plan view illustrating a state in which a conductive member is attached to the current collecting member according to the embodiment of the present invention, and Fig. 3B is a front view illustrating a state in which the conductive member is attached to the current collecting member according to the embodiment of the present invention.
Fig. 4 schematically illustrates current paths formed in a positive current collecting member according to the present invention.
Fig. 5 is a front view of a terminal forming portion of a current collecting member according to a second embodiment.
Fig. 6 illustrates a current collecting portion of the current collecting member according to the second embodiment, in which Fig. 6A is a plan view of the current collecting portion according to the embodiment, and Fig. 6B is a front view of the current collecting portion according to the embodiment.
Fig. 7 illustrates the current collecting member (the current collecting portion and the terminal forming portion) according to the second embodiment.
Fig. 8 schematically illustrates current paths formed in a positive current collecting member according to the related art.

### DESCRIPTION OF EMBODIMENTS

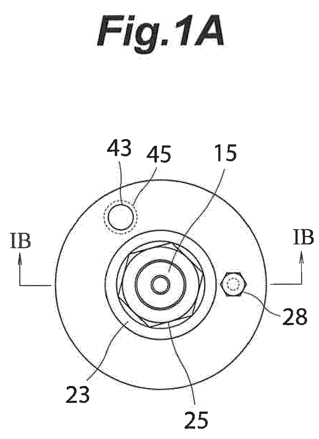

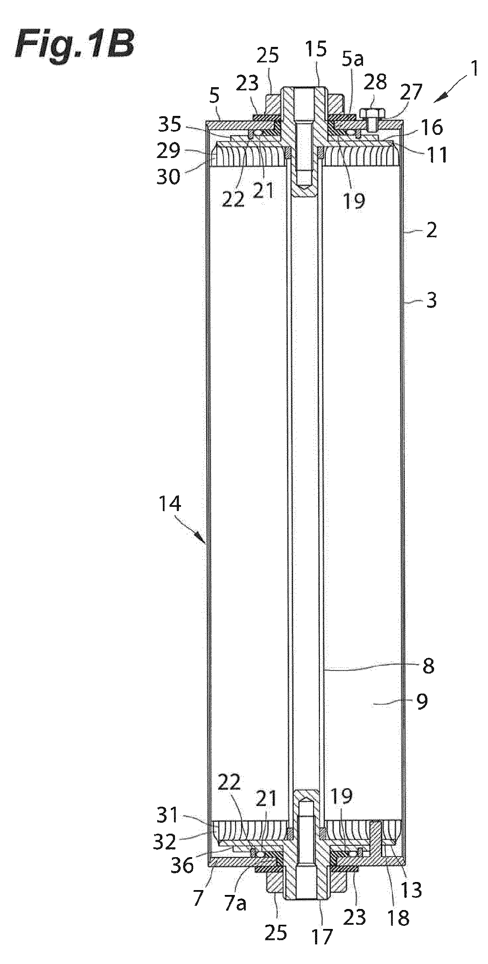

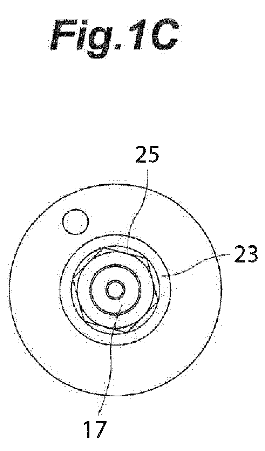

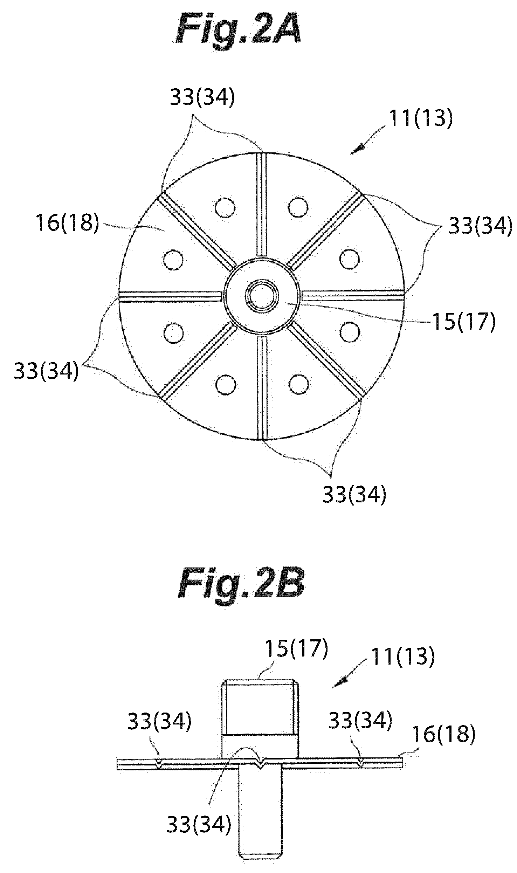

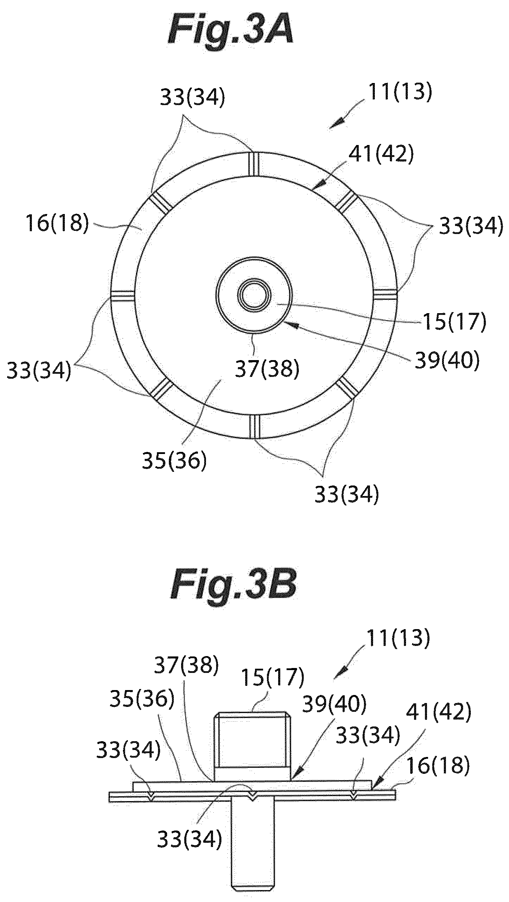

An embodiment in which the present invention is applied to a cylindrical lithium ion secondary battery will be described below with reference to the drawings. Fig. 1A is a plan view of a lithium ion secondary battery according to an embodiment of the present invention. Fig. 1B is a cross-sectional view taken along the line IB-IB of Fig. 1A. Fig. 1C is a bottom view of the lithium ion secondary battery. Figs. 2A and 2B illustrate a current collecting member according to the embodiment of the present invention. Figs. 3A and 3B illustrate a state in which a conductive member is attached to the current collecting member according to the embodiment of the present invention. In Fig. 1B, the cross section of a wound electrode group 9 is not illustrated.

### <Overall Configuration>

A cylindrical lithium ion secondary battery 1 according to the embodiment includes a battery container body 3, a positive-electrode battery lid 5, a negative-electrode battery lid 7, an axial core 8, a wound electrode group 9 infiltrated with an electrolyte, a positive current collecting member 11, and a negative current collecting member 13. The battery container body 3, the positive-electrode battery lid 5, and the negative-electrode battery lid 7 form a battery container 2. The battery container body 3 is made of a nickel-plated steel material, and has the shape of a cylinder that is open at both ends. The opening portions of the battery container body 3 at both ends are blocked by the positive-electrode battery lid 5 and the negative-electrode battery lid 7, respectively. Terminal through holes 5a and 7a are formed in the center portion of the positive-electrode battery lid 5 and the negative-electrode battery lid 7, respectively. A terminal forming portion 15 of the positive current collecting member 11 and a terminal forming portion 17 of the negative current collecting member 13 are inserted into the terminal through holes 5a and 7a, respectively, via an insulating ring 19, an O-ring 21, and a back-up ring 22. A threaded portion is formed on the outer peripheral portion of the terminal forming portions 15 and 17. A nut member 25 is screwed on each threaded portion. An insulating washer 23 is disposed between the nut member 25 and the insulating ring 19.

The positive-electrode battery lid 5 is provided with an electrolyte injection port 27 configured to allow injection of the electrolyte. The electrolyte injection port 27 is sealed with a bolt 28. In order to prevent a rise in pressure inside the battery, the positive-electrode battery lid 5 is provided with a gas discharge port 45 including a safety valve 43 configured to discharge a generated gas when the internal pressure is raised by the generated gas.

### <Wound Electrode Group>

As illustrated in Fig. 1B, the wound electrode group 9 is formed by winding a belt-like positive electrode 29 and a belt-like negative electrode 31 about the axial core 8 via a belt-like separator 33. The cross section of the wound electrode group 9 taken in the direction orthogonal to the axial core 8 has a swirling shape. In the positive electrode 29 according to the embodiment, a positive mixture containing a lithium manganese oxide, which is a lithium transition metal oxide, is generally uniformly applied to both surfaces of an aluminum foil serving as a positive current collector. An unapplied portion 30, to which no positive mixture is applied, is formed on one side of the aluminum foil in the longitudinal direction. The positive current collecting member 11, which is made of aluminum, is welded to the unapplied portion 30. In the negative electrode 31, a negative mixture containing carbon powder capable of occluding and releasing lithium ions as a negative active material is generally uniformly applied to both surfaces of a rolled copper foil serving as a negative current collector. An unapplied portion 32, to which no negative mixture is applied, is formed on one side of the copper foil in the longitudinal direction. The negative current collecting member 13 made of copper is welded to the unapplied portion 32. The wound electrode group 9, the positive current collecting member 11, and the negative current collecting member 13 form a secondary-battery electrode group unit 14.

### <Current Collecting Member>

Figs. 2A and 2B illustrate an example of the current collecting member (the positive current collecting member 11 or the negative current collecting member 13) for use in the embodiment. The positive current collecting member 11 and the negative current collecting member 13 are the same as each other except for the material. Therefore, reference numerals for the negative current collecting member 13 are given in parentheses. The positive current collecting member 11 is described as an example. The positive current collecting member 11 integrally includes the terminal forming portion 15 and a current collecting portion 16. The positive current collecting member 11 is brought closer to the wound electrode group 9 from above the unapplied portion 30 of the positive electrode of the wound electrode group 9 to place the positive current collecting member 11 on the unapplied portion 30. The unapplied portion 30 and the positive current collecting member 11 are welded to each other by laser welding. For laser welding, the current collecting portion 16 of the positive current collecting member 11 is provided with eight grooves 33 for welding that are convex so as to be in contact with the wound electrode group 9 and that are open in the direction away from the wound electrode group 9. The grooves 33 are formed in the current collecting portion 16 by pressing, and extend straight radially about the imaginary center point of the positive current collecting member 11.

The negative current collecting member 13 is the same as the positive current collecting member 11 except for being welded to the unapplied portion 32 of the negative electrode of the wound electrode group 9 and except for the material. Therefore, the negative current collecting member 13 is not described.

### <Conductive Member>

In the embodiment, a conductive member 35 made of aluminum and formed in the shape of a ring in which a circular through hole 37 is formed in the center portion is welded to the positive current collecting member 11. Meanwhile, a conductive member 36 made of copper and formed in the shape of a ring in which a circular through hole 38 is formed in the center portion is welded to the negative current collecting member 13. In Figs. 3A and 3B, only the current collecting member and the conductive member welded thereto are illustrated, and other components are not illustrated. The positive-side components and the negative-side components are the same as each other except for the material. Therefore, reference numerals for the negative-side components are given in parentheses. The positive-side components are described as an example. The conductive member 35 is welded after the positive current collecting member 11 is welded to the wound electrode group 9. The terminal forming portion 15 is passed through the through hole 37 formed in the conductive member 35. The conductive member 35 and the terminal forming portion 15 and the current collecting portion 16 are welded to each other with the conductive member 35 contacting the terminal forming portion 15 and the current collecting portion 16. The welding is performed for the purpose of mechanically and electrically connecting the terminal forming portion 15 and the conductive member 35 to each other and the current collecting portion 16 and the conductive member 35 to each other. To this end, the welding is performed between a portion of the conductive member 35 around the through hole 37 (a welded portion 39) and the terminal forming portion 15, and between the outer peripheral portion of the conductive member 35 (a welded portion 41) and the current collecting portion 16. The welding is performed through semiconductor laser welding, for example. The welding is performed in the same manner for the negative-side components.

### <Current Path>

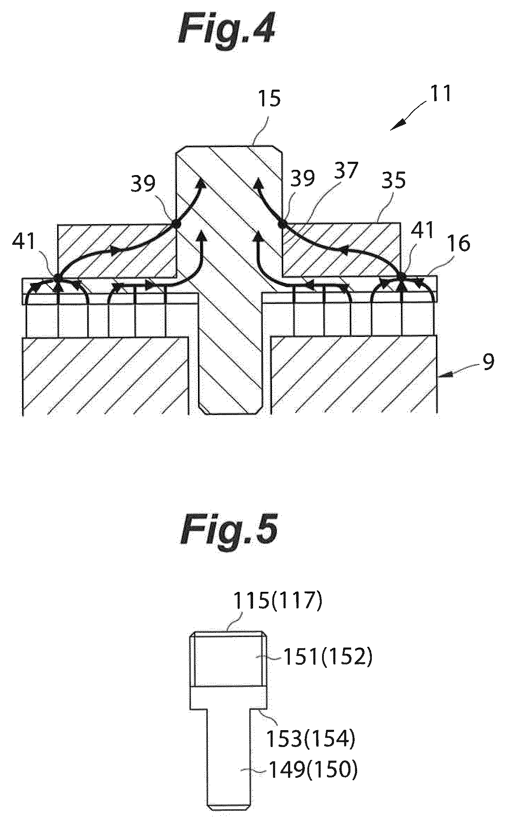

Fig. 4 schematically illustrates current paths formed by attaching the conductive member 35 to the positive current collecting member 11. Fig. 4 is a simplified cross-sectional view in which members other than the wound electrode group 9, the positive current collecting member 11, and the conductive member 35 are not illustrated in order to clarify the image of the current paths. Besides a current path in the positive current collecting member 11 from the current collecting portion 16 to the terminal forming portion 15, a current path passing from the current collecting portion 16 to the terminal forming portion 15 through the welded portion 41, the conductive member 35, and the welded portion 39 is formed by attaching the conductive member 35. Forming such current paths enables providing a first current path passing through the current collecting portion 16 and the terminal forming portion 15 and a second current path bypassing the first current path. This allows suppressing heat generation at the portion of connection between the current collecting portion 16 and the terminal forming portion 15 while reducing the thickness of the current collecting portion 16 in the lithium ion secondary battery which generates a large current. In order to enhance the bypass effect provided by the conductive member 35, the radius of the outline of the conductive member 35 is decided to be smaller than the radius of the outline of the current collecting portion 16, and to be equal to or more than half the radius of the outline of the current collecting portion 16. Current paths are formed in the same manner for the negative-side components, suppressing heat generation at the current collecting portion 18.

### [Second Embodiment]

Figs. 5 to 7 illustrate a current collecting member for use in a lithium ion secondary battery according to a second embodiment. In Figs. 5 to 7, component parts that are the same as those in the embodiment illustrated in Figs. 1 to 4 are denoted by reference numerals obtained by adding 100 to the reference numerals affixed to their counterparts in Figs. 1 to 4 to omit their descriptions.

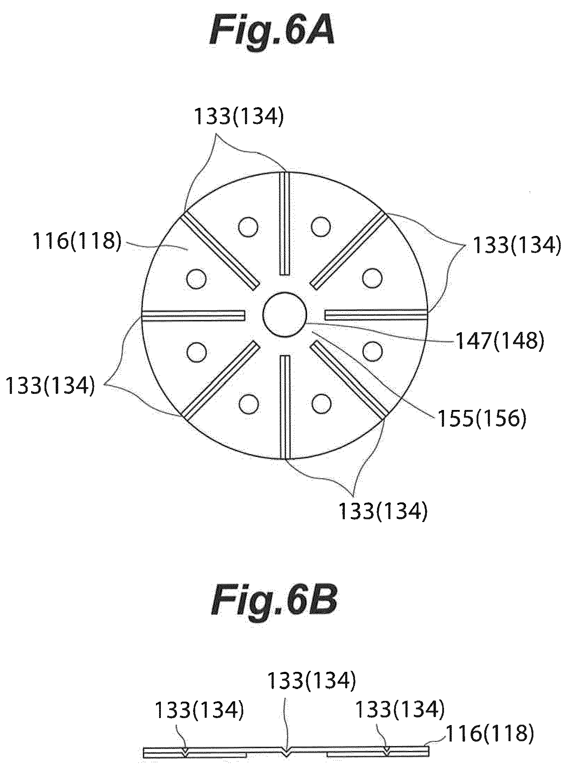

A positive current collecting member 111 is described as an example. In the second embodiment, the positive current collecting member 111 is formed from a terminal forming portion 115 (Fig. 5) and a current collecting portion 116 (Figs. 6A and 6B) that are discrete members.

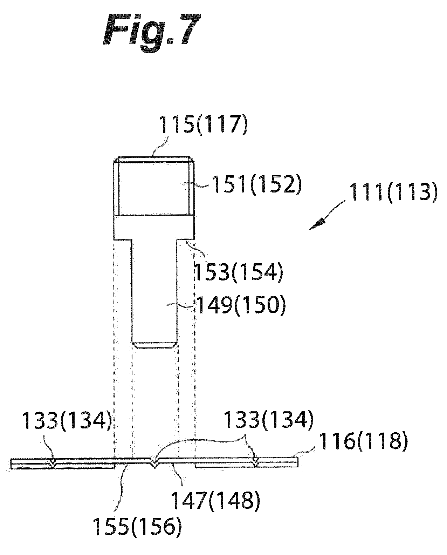

The terminal forming portion 115 is formed from a cylindrical fitting portion 149 to be passed through a through hole 147 of the current collecting portion 116, and a cylindrical terminal portion 151. The diameter of the through hole 147 formed in the current collecting portion 116 is just enough to allow passage of the fitting portion 149. The diameter of the terminal portion 151 is defined to be larger than the diameter of the fitting portion 149. Therefore, as illustrated in Fig. 7, when the fitting portion 149 of the terminal forming portion 115 is passed through the through hole 147, an abutting portion 153 of the terminal portion 151 contacts an abutted portion 155 at the periphery of the through hole 147. In the embodiment, a welded portion is formed between the fitting portion 149 of the terminal forming portion 115 and a portion of the current collecting portion 116 around the through hole 147 from the side of the current collecting portion 116 facing the unapplied portion (from the lower side of Fig. 7 on the paper), thus obtaining the positive current collecting member 111. The negative current collecting member 113 may be formed in the same manner as the positive current collector 111 according to the embodiment. Figs. 5 to 7 also indicate reference numerals for the negative current collector 113. It is a matter of course that the conductive member 35 illustrated in Fig. 4 may be attached by welding to the positive current collector 111 and the negative current collector 113 according to the embodiment. In this case, the terminal portion 151 of the terminal forming portion 115 and the conductive member 35 are welded to each other with the fitting portion 149 of the terminal forming portion 115 fitted in the through hole 37 of the conductive member 35 and the conductive member 35 contacting the current collecting portion 116. Then, the current collecting portion 116 and the conductive member 35 are welded to each other at a portion other than the plurality of welded portions.

### [Other Embodiments]

The material of the conductive member is not limited to that described above, and any conductive material that can be welded to the current collecting member may be selected as appropriate.

### INDUSTRIAL APPLICABILITY

According to the present invention, the conductive member allows formation of a current path, besides a current path passing through the current collecting portion and the terminal forming portion, even if the thickness of the current collecting portion of the current collecting member is reduced by adopting the tabless structure. This prevents a current from flowing locally, preventing heat generation.

### Reference Signs List

- 1: cylindrical lithium-ion secondary battery
- 2: battery container
- 3: battery container body
- 5: positive-electrode battery lid
- 5a: terminal through hole
- 7: negative-electrode battery lid
- 7a: terminal through hole
- 8: axial core
- 9: wound electrode group
- 11: positive current collecting member
- 13: negative current collecting member
- 14: secondary-battery electrode group unit
- 15: terminal forming portion
- 16: current collecting portion
- 17: terminal forming portion
- 18: current collecting portion
- 19: insulating ring
- 21: O-ring
- 22: back-up ring
- 23: insulating washer
- 25: nut member
- 27: electrolyte injection port
- 28: bolt
- 29: positive electrode
- 30: unapplied portion
- 31: negative electrode
- 32: unapplied portion
- 33 (34): groove
- 35 (36): conductive member
- 37 (38): through hole
- 39 (40): welded portion
- 41 (42): welded portion
- 43: safety valve
- 45: gas discharge port

## Claims

1. A secondary-battery electrode group unit comprising:
a wound electrode group (9) formed by winding a layered member including a positive electrode (29), a negative electrode (31), and a separator (33), the positive electrode (29) having an applied layer formed by applying a positive active material mixture to a first metal foil and an unapplied portion (30) on which the positive active material mixture is not applied along the applied layer of the positive active material mixture, the negative electrode (31) having an applied layer formed by applying a negative active material mixture to a second metal foil and an unapplied portion (32) on which the negative active material mixture is not applied along the applied layer of the negative active material mixture, and the positive electrode (29) and the negative electrode (31) being layered via the separator (33) such that the unapplied portion (30) of the positive electrode (29) and the unapplied portion (32) of the negative electrode (31) project in directions opposite to each other;
a positive current collecting member (11) welded to the unapplied portion (30) of the positive electrode (29), the unapplied portion (30) of the positive electrode (29) projecting beyond the separator (33) at one end portion of the wound electrode group (9); and
a negative current collecting member (13) welded to the unapplied portion (32) of the negative electrode (31), the unapplied portion (32) of the negative electrode (31) projecting beyond the separator (33) at the other end portion of the wound electrode group (9), and
at least one of the positive current collecting member (11) and the negative current collecting member (13) comprising a terminal forming portion (15,17) configured to form a terminal and a current collecting portion (16,18) including a plurality of welded portions (33, 34) provided to face the unapplied portion (30, 32) and welded to a part of the unapplied portion (30, 32) by laser welding,
a conductive member (35,36) is mechanically and electrically connected to the current collecting portion (16,18) and the terminal forming portion (15,17) to form, besides a current path passing directly through the current collecting portion (16,18) and the terminal forming portion (15,17) and bypassing the conductive member (35,36), another current path allowing a current to flow from a part of the current collecting portion (16,18) to the terminal forming portion (15,17) through the conductive member (35,36) while bypassing another part of the current collecting portion (16,18) **characterized in that** the conductive member (36, 50) is mechanically and electrically connected to the current collecting portion (16, 18) and the terminal forming portion (15, 17) by welding.

2. The secondary-battery electrode group unit according to claim 1, wherein:
the terminal forming portion (15,17) is unitarily formed with the current collecting portion (16,18) and provided at a central portion of the current collecting portion (16,18);
the conductive member (35,36) having a through hole formed at its center portion for the terminal forming portion (15,17) to pass therethrough; and
the terminal forming portion (15,17) and the conductive member (35, 36) are welded to each other and the current collecting portion (16,18) and the conductive member (35,36) are welded to each other at a portion other than the plurality of welded portions, (33,34) with the terminal forming portion (15,17) fitted in the through hole and the conductive member (35,36) contacting the current collecting portion (16,18).

3. The secondary-battery electrode group unit according to claim 2, wherein
the plurality of welded portions (33,34) are each formed by deforming a part of the current collecting portion (16,18) to be convex toward the unapplied portion (30,32), and are disposed to extend radially about the terminal forming portion (15,17).

4. The secondary-battery electrode group unit according to claim 2, wherein:
the current collecting portion (16,18) and the conductive member (35,36) are both circular in outline shape; and
a radius of the outline of the conductive member (35,36) is smaller than a radius of the outline of the current collecting portion (16, 18).

5. The secondary-battery electrode group unit according to claim 4, wherein
the radius of the outline of the conductive member (35, 36) is equal to or more than half the radius of the outline of the current collecting portion (16,18).

6. The secondary-battery electrode group unit according to claim 1, wherein:
the terminal forming portion (115,117) and the current collecting portion (116,118) are discrete members;
the current collecting portion (116,118) having a through hole (147,148) formed at its center portion for the terminal forming portion (115,117) to pass therethrough;
the current collecting portion (116,118) and the terminal forming portion (115,117) are welded to each other, with the terminal forming portion (115,117) fitted in the through hole (147,148) of the current collecting portion (116,118) and the terminal forming portion (115,117) contacting the current collecting portion (116,118);
the conductive member (35,36) having a through hole (37,38) formed at its center portion for the terminal forming portion (115,117) to pass therethrough; and
the terminal forming portion (115,117) and the conductive member (35, 36) are welded to each other and the current collecting portion (116,118) and the conductive member (35,36) are welded to each other at a portion other than the plurality of welded portions (33,34), with the terminal forming portion (115,117) fitted in the through hole (37, 38) and with the conductive member (35,36) contacting the current collecting portion (116,118).

7. A secondary battery comprising the secondary-battery electrode group unit (14) according to any one of claims 1 to 6.

8. A method of manufacturing a secondary-battery electrode group unit, the secondary-battery electrode group unit comprising:
a wound electrode group (9) formed by winding a layered member including a positive electrode (29), a negative electrode (31), and a separator (33), the positive electrode (29) having an applied layer formed by applying a positive active material mixture to a first metal foil and an unapplied portion (30) on which the positive active material mixture is not applied along the applied layer of the positive active material mixture, the negative electrode (31) having an applied layer formed by applying a negative active material mixture to a second metal foil and an unapplied portion (32) on which the negative active material mixture is not applied along the applied layer of the negative active material mixture, and the positive electrode (29) and the negative electrode (31) being layered via the separator (33) such that the unapplied portion (30) of the positive electrode (29) and the unapplied portion (31) of the negative electrode (32) project in directions opposite to each other;
a positive current collecting member (11) welded to the unapplied portion (30) of the positive electrode (29), the unapplied portion (30) of the positive electrode (29) projecting beyond the separator (33) at one end portion of the wound electrode group (9); and
a negative current collecting member (13) welded to the unapplied portion (32) of the negative electrode (31), the unapplied portion (32) of the negative electrode (31) projecting beyond the separator (33) at the other end portion of the wound electrode group (9),
at least one of the positive current collecting member (11) and the negative current collecting member (13) comprising a terminal forming portion (15,17) configured to form a terminal and a current collecting portion (16,18) including a plurality of welded portions (33, 34) provided to face the unapplied portion (30, 32) and welded to a part of the unapplied portion (30, 32) by laser welding, **characterized in that**:
the method comprises:
welding the plurality of welded portions (33,34) of the current collecting portion (16,18) to the unapplied portion (30,32) by laser welding; and
thereafter welding a conductive member (35,36) to the current collecting portion (16,18) and the terminal forming portion (15,17) to form, besides a current path passing directly through the current collecting portion (16,18) and the terminal forming portion (15,17) and bypassing the conductive member (35, 36), another current path allowing a current to flow from a part of the current collecting portion (16,18) to the terminal forming portion (15,17) through the conductive member (35,36) while bypassing another part of the current collecting portion (16, 18).

## Patentansprüche

1. Sekundärbatterie-Elektrodengruppeneinheit, umfassend:
eine gewickelte Elektrodengruppe (9), die durch Wickeln eines geschichteten Elements, das eine positive Elektrode (29), eine negative Elektrode (31) und einen Trenner (33) umfasst, ausgebildet ist, wobei die positive Elektrode (29) eine aufgebrachte Schicht, die durch Aufbringen eines positiven aktiven Materialgemischs auf einer ersten Metallfolie ausgebildet ist, und einen aufbringungsfreien Abschnitt (30), auf dem das positive aktive Materialgemisch entlang der aufgebrachten Schicht des positiven aktiven Materialgemischs nicht aufgebracht ist, aufweist, wobei die negative Elektrode (31) eine aufgebrachte Schicht, die durch Aufbringen eines negativen aktiven Materialgemischs auf einer zweiten Metallfolie ausgebildet ist, und einen aufbringungsfreien Abschnitt (32), auf dem das negative aktive Materialgemisch entlang der aufgebrachten Schicht des negativen aktiven Materialgemischs nicht aufgebracht ist, aufweist, und wobei die positive Elektrode (29) und die negative Elektrode (31) mittels des Trenners (33) geschichtet sind, sodass der aufbringungsfreie Abschnitt (30) der positiven Elektrode (29) und der aufbringungsfreie Abschnitt (32) der negativen Elektrode (31) in zueinander entgegengesetzte Richtungen ragen;
ein positives stromabnehmendes Element (11), das an den aufbringungsfreien Abschnitt (30) der positiven Elektrode (29) geschweißt ist, wobei der aufbringungsfreie Abschnitt (30) der positiven Elektrode (29) an einem Endabschnitt der gewickelten Elektrodengruppe (9) über den Trenner (33) hinausragt; und
ein negatives stromabnehmendes Element (13), das an den aufbringungsfreien Abschnitt (32) der negativen Elektrode (31) geschweißt ist, wobei der aufbringungsfreie Abschnitt (32) der negativen Elektrode (31) an dem anderen Endabschnitt der gewickelten Elektrodengruppe (9) über den Trenner (33) hinausragt, und
wobei zumindest eines aus dem positiven stromabnehmenden Element (11) und dem negativen stromabnehmenden Element (13) einen anschlussausbildenden Abschnitt (15, 17), der konfiguriert ist, um einen Anschluss auszubilden, und einen stromabnehmenden Abschnitt (16, 18), der eine Vielzahl von geschweißten Abschnitten (33, 34) umfasst, die bereitgestellt sind, um dem aufbringungsfreien Abschnitt (30, 32) gegenüberzuliegen, und durch Laserschweißen an einen Teil des aufbringungsfreien Abschnitts (30, 32) geschweißt sind, umfasst,
und wobei ein leitendes Element (35, 36) mechanisch und elektrisch mit dem stromabnehmenden Abschnitt (16, 18) und dem anschlussausbildenden Abschnitt (15, 17) verbunden ist, um neben einem Strompfad, der direkt durch den stromabnehmenden Abschnitt (16, 18) und den anschlussausbildenden Abschnitt (15, 17) hindurchgeht und das leitende Element (35, 36) umgeht, einen anderen Strompfad auszubilden, der gestattet, dass ein Strom von einem Teil des stromabnehmenden Abschnitts (16, 18) durch das leitende Element (35, 36) zu dem anschlussausbildenden Abschnitt (15, 17) fließt, während er einen anderen Teil des stromabnehmenden Abschnitts (16, 18) umgeht,
**dadurch gekennzeichnet, dass** das leitende Element (36, 50) durch Schweißen mechanisch und elektrisch mit dem stromabnehmenden Abschnitt (16, 18) und dem anschlussausbildenden Abschnitt (15, 17) verbunden ist.

2. Sekundärbatterie-Elektrodengruppeneinheit gemäß Anspruch 1, worin:
der anschlussausbildende Abschnitt (15, 17) einheitlich mit dem stromabnehmenden Abschnitt (16, 18) ausgebildet ist und an einem Mittelabschnitt des stromabnehmenden Abschnitts (16, 18) bereitgestellt ist;
wobei das leitende Element (35, 36) ein Durchgangsloch aufweist, das an seinem Mittelabschnitt ausgebildet ist, damit der anschlussausbildende Abschnitt (15, 17) durch diesen hindurchgeht; und
der anschlussausbildende Abschnitt (15, 17) und das leitende Element (35, 36) aneinander geschweißt sind und der stromabnehmende Abschnitt (16, 18) und das leitende Element (35, 36) an einem anderen Abschnitt als der Vielzahl von geschweißten Abschnitten (33, 34) aneinander geschweißt sind, wobei der anschlussausbildende Abschnitt (15, 17) in das Durchgangsloch eingepasst ist und das leitende Element (35, 36) den stromabnehmenden Abschnitt (16, 18) berührt.

3. Sekundärbatterie-Elektrodengruppeneinheit gemäß Anspruch 2, worin
die Vielzahl von geschweißten Abschnitten (33, 34) jeweils ausgebildet sind, indem ein Teil des stromabnehmenden Abschnitts (16, 18) verformt ist, um zu dem aufbringungsfreien Abschnitt (30, 32) hin konvex zu sein und angeordnet sind, um sich radial um den anschlussausbildenden Abschnitt (15, 17) zu erstrecken.

4. Sekundärbatterie-Elektrodengruppeneinheit gemäß Anspruch 2, worin:
der stromabnehmende Abschnitt (16, 18) und das leitende Element (35, 36) beide von kreisförmiger Grundriss-Form sind; und
ein Radius des Grundrisses des leitenden Elements (35, 36) kleiner ist als ein Radius des Grundrisses des stromabnehmenden Abschnitts (16, 18).

5. Sekundärbatterie-Elektrodengruppeneinheit gemäß Anspruch 4, worin
der Radius des Grundrisses des leitenden Elements (35, 36) gleich der oder größer als die Hälfte des Radius des Grundrisses des stromabnehmenden Abschnitts (16, 18) ist.

6. Sekundärbatterie-Elektrodengruppeneinheit gemäß Anspruch 1, worin:
der anschlussausbildende Abschnitt (115, 117) und der stromabnehmende Abschnitt (116, 118) diskrete Elemente sind;
wobei der stromabnehmende Abschnitt (116, 118) ein Durchgangsloch (147, 148) aufweist, das in seinem Mittelabschnitt ausgebildet ist, damit der anschlussausbildende Abschnitt (115, 117) durch diesen hindurchgeht;
der stromabnehmende Abschnitt (116, 118) und der anschlussausbildende Abschnitt (115, 117) aneinander geschweißt sind, wobei der anschlussausbildende Abschnitt (115, 117) in das Durchgangsloch (147, 148) des stromabnehmenden Abschnitts (116, 118) eingepasst ist und der anschlussausbildende Abschnitt (115, 117) den stromabnehmenden Abschnitt (116, 118) berührt;
wobei das leitende Element (35, 36) ein Durchgangsloch (37, 38) aufweist, das an seinem Mittelabschnitt ausgebildet ist, damit der anschlussausbildende Abschnitt (115, 117) durch diesen hindurchgeht; und
der anschlussausbildende Abschnitt (115, 117) und das leitende Element (35, 36) aneinander geschweißt sind und der stromabnehmende Abschnitt (116, 118) und das leitende Element (35, 36) an einem anderen Abschnitt als der Vielzahl von geschweißten Abschnitten (33, 34) aneinander geschweißt sind, wobei der anschlussausbildende Abschnitt (115, 117) in das Durchgangsloch (37, 38) eingepasst ist und wobei das leitende Element (35, 36) den stromabnehmenden Abschnitt (116, 118) berührt.

7. Sekundärbatterie, umfassend die Sekundärbatterie-Elektrodengruppeneinheit (14) gemäß einem aus Anspruch 1 bis 6.

8. Verfahren zum Herstellen einer Sekundärbatterie-Elektrodengruppeneinheit, wobei die Sekundärbatterie-Elektrodengruppeneinheit umfasst:
eine gewickelte Elektrodengruppe (9), die durch Wickeln eines geschichteten Elements, das eine positive Elektrode (29), eine negative Elektrode (31) und einen Trenner (33) umfasst, ausgebildet ist, wobei die positive Elektrode (29) eine aufgebrachte Schicht, die durch Aufbringen eines positiven aktiven Materialgemischs auf einer ersten Metallfolie ausgebildet ist, und einen aufbringungsfreien Abschnitt (30), auf dem das positive aktive Materialgemisch entlang der aufgebrachten Schicht des positiven aktiven Materialgemischs nicht aufgebracht ist, aufweist, wobei die negative Elektrode (31) eine aufgebrachte Schicht, die durch Aufbringen eines negativen aktiven Materialgemischs auf einer zweiten Metallfolie ausgebildet ist, und einen aufbringungsfreien Abschnitt (32), auf dem das negative aktive Materialgemisch entlang der aufgebrachten Schicht des negativen aktiven Materialgemischs nicht aufgebracht ist, aufweist, und wobei die positive Elektrode (29) und die negative Elektrode (31) mittels des Trenners (33) geschichtet sind, sodass der aufbringungsfreie Abschnitt (30) der positiven Elektrode (29) und der aufbringungsfreie Abschnitt (32) der negativen Elektrode (31) in zueinander entgegengesetzte Richtungen ragen;
ein positives stromabnehmendes Element (11), das an den aufbringungsfreien Abschnitt (30) der positiven Elektrode (29) geschweißt ist, wobei der aufbringungsfreie Abschnitt (30) der positiven Elektrode (29) an einem Endabschnitt der gewickelten Elektrodengruppe (9) über den Trenner (33) hinausragt; und
ein negatives stromabnehmendes Element (13), das an den aufbringungsfreien Abschnitt (32) der negativen Elektrode (31) geschweißt ist, wobei der aufbringungsfreie Abschnitt (32) der negativen Elektrode (31) an dem anderen Endabschnitt der gewickelten Elektrodengruppe (9) über den Trenner (33) hinausragt,
wobei zumindest eines aus dem positiven stromabnehmenden Element (11) und dem negativen stromabnehmenden Element (13) einen anschlussausbildenden Abschnitt (15, 17), der konfiguriert ist, um einen Anschluss auszubilden, und einen stromabnehmenden Abschnitt (16, 18), der eine Vielzahl von geschweißten Abschnitten (33, 34) umfasst, die bereitgestellt sind, um dem aufbringungsfreien Abschnitt (30, 32) gegenüberzuliegen, und durch Laserschweißen an einen Teil des aufbringungsfreien Abschnitts (30, 32) geschweißt sind, umfasst, **dadurch gekennzeichnet, dass**:
das Verfahren umfasst:
Schweißen der Vielzahl von geschweißten Abschnitten (33, 34) des stromabnehmenden Abschnitts (16, 18) an den aufbringungsfreien Abschnitt (30, 32) durch Laserschweißen; und
danach Schweißen eines leitenden Elements (35, 36) an den stromabnehmenden Abschnitt (16, 18) und den anschlussausbildenden Abschnitt (15, 17), um neben einem Strompfad, der direkt durch den stromabnehmenden Abschnitt (16, 18) und den anschlussausbildenden Abschnitt (15, 17) hindurchgeht und das leitende Element (35, 36) umgeht, einen anderen Strompfad auszubilden, der gestattet, dass ein Strom von einem Teil des stromabnehmenden Abschnitts (16, 18) durch das leitende Element (35, 36) zu dem anschlussausbildenden Abschnitt (15, 17) fließt, während er einen anderen Teil des stromabnehmenden Abschnitts (16, 18) umgeht.

## Revendications

1. Unité de groupe d'électrodes de batterie secondaire comprenant :
un groupe d'électrodes enroulées (9) formé en enroulant un élément en couches comprenant une électrode positive (29), une électrode négative (31), et un séparateur (33), l'électrode positive (29) comportant une couche avec application formée en appliquant un mélange de matériau actif positif à une première feuille métallique et une partie sans application (30) sur laquelle le mélange de matériau actif positif n'est pas appliqué le long de la couche avec application du mélange de matériau actif positif, l'électrode négative (31) comportant une couche avec application formée en appliquant un mélange de matériau actif négatif à une deuxième feuille métallique et une partie sans application (32) sur laquelle le mélange de matériau actif négatif n'est pas appliqué le long de la couche avec application du mélange de matériau actif négatif, et l'électrode positive (29) et l'électrode négative (31) étant disposées en couches via le séparateur (33) de sorte que la partie sans application (30) de l'électrode positive (29) et la partie sans application (32) de l'électrode négative (31) font saillie dans des directions à l'opposé l'une de l'autre ;
un élément de collecte de courant positif (11) soudé à la partie sans application (30) de l'électrode positive (29), la partie sans application (30) de l'électrode positive (29) faisant saillie au-delà du séparateur (33) au niveau d'une partie d'extrémité du groupe d'électrodes enroulées (9) ; et
un élément de collecte de courant négatif (13) soudé à la partie sans application (32) de l'électrode négative (31), la partie sans application (32) de l'électrode négative (31) faisant saillie au-delà du séparateur (33) au niveau de l'autre partie d'extrémité du groupe d'électrodes enroulées (9), et
au moins l'un de l'élément de collecte de courant positif (11) et de l'élément de collecte de courant négatif (13) comprenant une partie formant borne (15, 17) configurée pour former une borne et une partie de collecte de courant (16, 18) comprenant une pluralité de parties soudées (33, 34) prévues de manière à faire face à la partie sans application (30, 32) et soudées à une partie de la partie sans application (30, 32) par soudage au laser,
un élément conducteur (35, 36) est connecté mécaniquement et électriquement à la partie de collecte de courant (16, 18) et à la partie formant borne (15, 17) pour former, en plus d'un trajet de courant passant directement à travers la partie de collecte de courant (16, 18) et la partie formant borne (15, 17) et contournant l'élément conducteur (35, 36), un autre trajet de courant permettant à un courant de circuler d'une partie de la partie de collecte de courant (16, 18) à la partie formant borne (15, 17) à travers l'élément conducteur (35, 36) tout en contournant une autre partie de la partie de collecte de courant (16, 18),
**caractérisée en ce que** l'élément conducteur (36, 50) est connecté mécaniquement et électriquement à la partie de collecte de courant (16, 18) et à la partie formant borne (15, 17) par soudage.

2. Unité de groupe d'électrodes de batterie secondaire selon la revendication 1, dans laquelle :
la partie formant borne (15, 17) est formée de manière unitaire avec la partie de collecte de courant (16, 18) et prévue au niveau d'une partie centrale de la partie de collecte de courant (16, 18) ;
l'élément conducteur (35, 36) comportant un trou traversant formé au niveau de sa partie centrale pour que la partie formant borne (15, 17) passe à travers celui-ci ; et
la partie formant borne (15, 17) et l'élément conducteur (35, 36) sont soudés l'un à l'autre et la partie de collecte de courant (16, 18) et l'élément conducteur (35, 36) sont soudés l'un à l'autre au niveau d'une partie autre que la pluralité de parties soudées (33, 34) avec la partie formant borne (15, 17) insérée dans le trou traversant et l'élément conducteur (35, 36) en contact avec la partie de collecte de courant (16, 18).

3. Unité de groupe d'électrodes de batterie secondaire selon la revendication 2, dans laquelle
la pluralité de parties soudées (33, 34) sont chacune formées en déformant une partie de la partie de collecte de courant (16, 18) pour qu'elle soit convexe vers la partie sans application (30, 32), et sont disposées de manière à s'étendre radialement autour de la partie formant borne (15, 17).

4. Unité de groupe d'électrodes de batterie secondaire selon la revendication 2, dans laquelle :
la partie de collecte de courant (16, 18) et l'élément conducteur (35, 36) ont tous deux un contour circulaire ; et
un rayon du contour de l'élément conducteur (35, 36) est plus petit qu'un rayon du contour de la partie de collecte de courant (16, 18).

5. Unité de groupe d'électrodes de batterie secondaire selon la revendication 4, dans laquelle
le rayon du contour de l'élément conducteur (35, 36) est égal ou supérieur à une moitié du rayon du contour de la partie de collecte de courant (16, 18).

6. Unité de groupe d'électrodes de batterie secondaire selon la revendication 1, dans laquelle :
la partie formant borne (115, 117) et la partie de collecte de courant (116, 118) sont des éléments discrets ;
la partie de collecte de courant (116, 118) comportant un trou traversant (147, 148) formé au niveau de sa partie centrale pour que la partie formant borne (115, 117) passe à travers celui-ci ;
la partie de collecte de courant (116, 118) et la partie formant borne (115, 117) sont soudées l'une à l'autre, la partie formant borne (115, 117) étant insérée dans le trou traversant (147, 148) de la partie de collecte de courant (116, 118) et la partie formant borne (115, 117) étant en contact avec la partie de collecte de courant (116, 118) ;
l'élément conducteur (35, 36) comportant un trou traversant (37, 38) formé au niveau de sa partie centrale pour que la partie formant borne (115, 117) passe à travers celui-ci ; et
la partie formant borne (115, 117) et l'élément conducteur (35, 36) sont soudés l'un à l'autre et la partie de collecte de courant (116, 118) et l'élément conducteur (35, 36) sont soudés l'un à l'autre au niveau d'une partie autre que la pluralité de parties soudées (33, 34), la partie formant borne (115, 117) étant insérée dans le trou traversant (37, 38) et l'élément conducteur (35, 36) étant en contact avec la partie de collecte de courant (116, 118).

7. Batterie secondaire comprenant l'unité de groupe d'électrodes de batterie secondaire (14) selon l'une quelconque des revendications 1 à 6.

8. Procédé de fabrication d'une unité de groupe d'électrodes de batterie secondaire, l'unité de groupe d'électrodes de batterie secondaire comprenant :
un groupe d'électrodes enroulées (9) formées en enroulant un élément en couches comprenant une électrode positive (29), une électrode négative (31), et un séparateur (33), l'électrode positive (29) comportant une couche avec application formée en appliquant un mélange de matériau actif positif à une première feuille métallique et une partie sans application (30) sur laquelle le mélange de matériau actif positif n'est pas appliqué le long de la couche avec application du mélange de matériau actif positif, l'électrode négative (31) comportant une couche avec application formée en appliquant un mélange de matériau actif négatif à une deuxième feuille métallique et une partie sans application (32) sur laquelle le mélange de matériau actif négatif n'est pas appliqué le long de la couche avec application du mélange de matériau actif négatif, et l'électrode positive (29) et l'électrode négative (31) étant disposées en couches via le séparateur (33) de sorte que la partie sans application (30) de l'électrode positive (29) et la partie sans application (31) de l'électrode négative (32) font saillie dans des directions à l'opposé l'une de l'autre ;
un élément de collecte de courant positif (11) soudé à la partie sans application (30) de l'électrode positive (29), la partie sans application (30) de l'électrode positive (29) faisant saillie au-delà du séparateur (33) au niveau d'une partie d'extrémité du groupe d'électrodes enroulées (9) ; et
un élément de collecte de courant négatif (13) soudé à la partie sans application (32) de l'électrode négative (31), la partie sans application (32) de l'électrode négative (31) faisant saillie au-delà du séparateur (33) au niveau de l'autre partie d'extrémité du groupe d'électrodes enroulées (9),
au moins l'un de l'élément de collecte de courant positif (11) et de l'élément de collecte de courant négatif (13) comprenant une partie formant borne (15, 17) configurée pour former une borne et une partie de collecte de courant (16, 18) comprenant une pluralité de parties soudées (33, 34) prévues de manière à faire face à la partie sans application (30, 32) et soudées à une partie de la partie sans application (30, 32) par soudage au laser, **caractérisé en ce que** :
le procédé comprend :
le soudage de la pluralité de parties soudées (33, 34) de la partie de collecte de courant (16, 18) à la partie sans application (30, 32) par soudage au laser ; et
ensuite, le soudage d'un élément conducteur (35, 36) à la partie de collecte de courant (16, 18) et à la partie formant borne (15, 17) pour former, en plus d'un trajet de courant passant directement à travers la partie de collecte de courant (16, 18) et la partie formant borne (15, 17) et contournant l'élément conducteur (35, 36), un autre trajet de courant permettant à un courant de circuler d'une partie de la partie de collecte de courant (16, 18) à la partie formant borne (15, 17) à travers l'élément conducteur (35, 36) tout en contournant une autre partie de la partie de collecte de courant (16, 18).
